# EUROPEAN PATENT APPLICATION

(11) **EP 4 819 732 A1**
(43) Date of publication of application: **07.10.2026**
(21) Application number: 23959729.7
(22) Date of filing: 28.11.2023
(51) Int. Cl.: H04W 72/21, H04B 7/0456

(54) **PUSCH TRANSMISSION METHOD AND APPARATUS, DEVICE, AND STORAGE MEDIUM**

(71) Applicant: GUANGDONG OPPO MOBILE TELECOMMUNICATIONS CORP., LTD., Dongguan, Guangdong 523860 (CN)
(72) Inventor: SHI, Zhihua, Dongguan, Guangdong 523860 (CN); CHEN, Wenhong, Dongguan, Guangdong 523860 (CN); HUANG, Yingpei, Dongguan, Guangdong 523860 (CN)
(74) Representative: Taor, Simon Edward William
(86) International application number: PCT/CN2023/134766
(87) International publication number: WO 2025/111806

(57) **Abstract**

A method and apparatus for physical uplink shared channel (PUSCH) transmission, a device, and a storage medium are provided, which relate to the technical field of mobile communication. The method is performed by a terminal device, and the method includes the following. A PUSCH is transmitted via a precoding matrix, where the precoding matrix corresponds to one 3-port transmit precoding matrix indicator (TPMI) or corresponds to one 3-port codebook.

## Description

### TECHNICAL FIELD

This disclosure relates to the technical field of mobile communication, in particular to a method and apparatus for physical uplink shared channel (PUSCH) transmission, a device, and a storage medium.

### BACKGROUND

In a new radio (NR) system, uplink (UL) transmission supports codebook-based transmission (codebook-based physical uplink shared channel (PUSCH)) and non-codebook-based transmission (non-codebook-based PUSCH).

In the related art, the NR system supports PUSCH transmission with one or more ports, for example, PUSCH transmission with one port, two ports, four ports, or eight ports.

### SUMMARY

A method and apparatus for physical uplink shared channel (PUSCH) transmission, a device, and a storage medium are provided in implementations of the present disclosure. The technical solutions are as follows.

In an aspect, a method for PUSCH transmission is provided in implementations of the present disclosure. The method is performed by a terminal device, and the method includes the following. A PUSCH is transmitted via a precoding matrix, where the precoding matrix corresponds to one 3-port transmit precoding matrix indicator (TPMI) or corresponds to one 3-port codebook.

In an aspect, a method for PUSCH transmission is provided in implementations of the present disclosure. The method is performed by a network device, and the method includes the following. A PUSCH transmitted by a terminal device is received via a precoding matrix, where the precoding matrix corresponds to one 3-port TPMI or corresponds to one 3-port codebook.

In another aspect, an apparatus for PUSCH transmission is provided in implementations of the present disclosure. The apparatus includes a transmitting module. The transmitting module is configured to transmit a PUSCH via a precoding matrix, where the precoding matrix corresponds to one 3-port TPMI or corresponds to one 3-port codebook.

In another aspect, an apparatus for PUSCH transmission is provided in implementations of the present disclosure. The apparatus includes a receiving module. The receiving module is configured to receive a PUSCH transmitted by a terminal device via a precoding matrix, where the precoding matrix corresponds to one 3-port TPMI or corresponds to one 3-port codebook.

In another aspect, a communication device is provided in implementations of the present disclosure. The communication device includes a processor, a memory, and a transceiver. The memory is configured to store a computer program. The processor is configured to execute the computer program, to cause the communication device to implement the method for PUSCH transmission.

In yet another aspect, a computer-readable storage medium is further provided in implementations of the present disclosure. The computer-readable storage medium is configured to store a computer program, and the computer program is loaded and executed by a processor to implement the method for PUSCH transmission.

In yet another aspect, a chip is further provided in the present disclosure. The chip includes an integrated circuit and firmware disposed in the integrated circuit. The chip is configured to execute in a communication device, to cause the communication device to perform the method for PUSCH transmission.

In yet another aspect, a computer program product is provided in the present disclosure. The computer program product includes computer instructions stored in a computer-readable storage medium. A processor of a communication device is configured to read the computer instructions from the computer-readable storage medium and execute the computer instructions, to cause the communication device to perform the method for PUSCH transmission.

In yet another aspect, a computer program is provided in the present disclosure. The computer program is executed by a processor of a communication device, to implement the method for PUSCH transmission.

A transmission scheme for channel control is provided in implementations of the present disclosure. A terminal device transmits a PUSCH via a precoding matrix corresponding to one 3-port TPMI or one 3-port codebook, such that 3-port PUSCH transmission can be supported by a network, thereby expanding the applicable scope of PUSCH transmission.

### BRIEF DESCRIPTION OF THE DRAWINGS

FIG. 1 is a schematic architectural diagram of a communication system provided in an implementation of the present disclosure.
FIG. 2 is a flowchart of a method for PUSCH transmission provided in an implementation of the present disclosure.
FIG. 3 is a flowchart of a method for PUSCH transmission provided in an implementation of the present disclosure.
FIG. 4 is a flowchart illustrating a method for PUSCH transmission provided in an implementation of the present disclosure.
FIG. 5 is a block diagram of an apparatus for PUSCH transmission provided in an implementation of the present disclosure.
FIG. 6 is a block diagram of an apparatus for PUSCH transmission provided in an implementation of the present disclosure.
FIG. 7 is a schematic structural diagram of a communication device provided in an implementation of the present disclosure.

### DETAILED DESCRIPTION

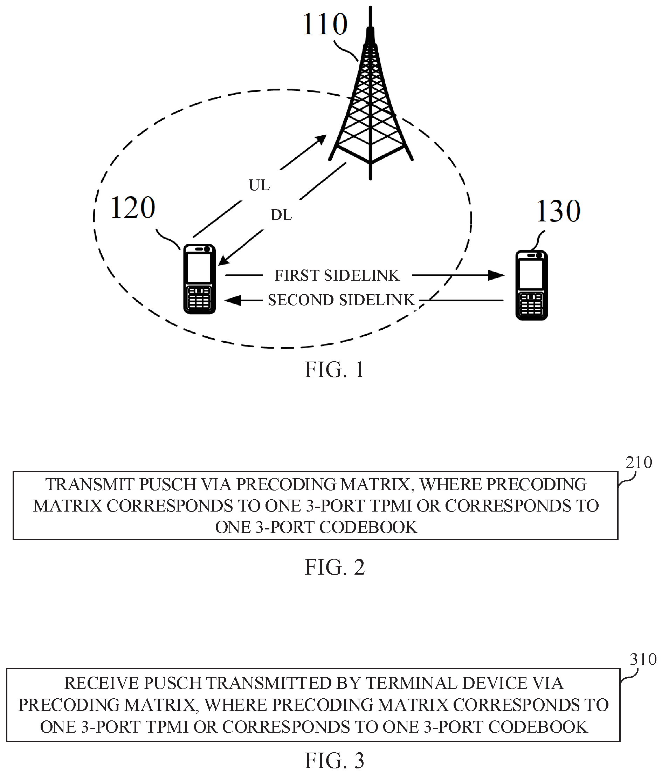

FIG. 1 illustrates a schematic diagram of a communication system involved in an exemplary implementation of the present disclosure. The communication system includes a network device 110 and a terminal device 120, and/or a terminal device 120 and a terminal device 130, which is not limited in the present disclosure.

The network device 110 in the present disclosure provides wireless communication functions. The network device 110 includes but not limited to: an evolved node B (eNB), a radio network controller (RNC), a node B (NB), a base station controller (BSC), a base transceiver station (BTS), a home base station (e.g., a home evolved node B, or a home node B (HNB)), a baseband unit (BBU), an access point (AP) in a wireless fidelity (Wi-Fi) system, a wireless relay node, a wireless backhaul node, a transmission point (TP), a transmission and reception point (TRP), etc. It may also be a next generation node B (gNB) or a transmission point (a TRP or a TP) in a 5th generation (5G) mobile communication system, or an antenna panel or a set of antenna panels( including multiple antenna panels) of a base station in the 5G system, or a network node constituting a gNB or a transmission point, such as a baseband unit (BBU) or a distributed unit (DU), etc., or a base station in a beyond 5th generation (B5G) mobile communication system, a 6th generation (6G) mobile communication system, etc., or a core network (CN), a fronthaul, a backhaul, a radio access network (RAN), a network slice, etc., or a serving cell, a primary cell (PCell), a primary secondary cell (PSCell), a special Cell (SpCell), a secondary cell (SCell), a neighboring cell, etc., of a terminal device.

The terminal device 120 and/or the terminal device 130 in the present disclosure, also known as a user equipment (UE), an access terminal, a user unit, a user station, a mobile station, a mobile platform, a remote station, a remote terminal, a mobile device, a user terminal, a terminal, a wireless communication device, a user agent, a user apparatus. The terminal includes but is not limited to: a handheld device, a wearable device, an in-vehicle device, an Internet of things (IoT) device, etc., such as: a mobile phone, a tablet, an e-book reader, a laptop, a desktop computer, a television, a game console, a mobile Internet device (MID), an augmented reality (AR) terminal, a virtual reality (VR) terminal, and a mixed reality (MR) terminal, a wearable device, a handle, an electronic tag, a controller, a wireless terminal in industrial control, a wireless terminal in self-driving, a wireless terminal in remote medical, a wireless terminal in smart grid, a wireless terminal in transportation safety, a wireless terminal in smart city, a wireless terminal in smart home, a wireless terminal in remote medical surgery, a cellular phone, a cordless phone, a session initiation protocol (SIP) phone, a wireless local loop (WLL) station, a personal digital assistant (PDA), a set top box (STB), a customer premise equipment (CPE), etc.

The network device 110 and the terminal device 120 communicate with each other using a certain air interface technology, such as a Uu interface.

Exemplarily, there are two communication scenarios between the network device 110 and the terminal device 120: an uplink (UL) communication scenario and a downlink (DL) communication scenario. The UL communication refers to sending signals to the network device 110. The DL communication refers to sending signals to the terminal device 120.

The terminal device 120 and the terminal device 130 communicate with each other using a certain air interface technology, such as a PC5 interface.

In some implementations, there are two communication scenarios between the terminal device 120 and the terminal device 130: a first sidelink communication scenario and a second sidelink communication scenario. The first sidelink communication refers to sending signals to the terminal device 130. The second sidelink communication refers to sending signals to the terminal device 120.

Both the terminal device 120 and the terminal device 130 are within a network coverage and located in the same cell, or both the terminal device 120 and the terminal device 130 are within the network coverage but located in different cells, or the terminal device 120 is within the network coverage and the terminal device 130 is outside the network coverage.

The technical solutions provided in implementations of the present disclosure may be applied to various communication systems, such as: a global system of mobile communication (GSM) system, a code division multiple access (CDMA) system, a wideband code division multiple access (WCDMA) system, a general packet radio service (GPRS) system, a long term evolution (LTE) system, a LTE frequency division duplex (FDD) system, an LTE time division duplex (TDD) system, an advanced long term evolution (LTE-A) system, a universal mobile telecommunication system (UMTS), a worldwide interoperability for microwave access (WiMAX) communication system, a 5G mobile communication system, a new radio (NR) system, an evolved system of the NR system, an LTE-based access to unlicensed spectrum (LTE-U) system, an NR-based access to unlicensed spectrum (NR-U) system, a terrestrial network (TN) system, a non-terrestrial network (NTN) system, a wireless local area network (WLAN) system, a Wi-Fi system, a cellular IoT system, a cellular passive IoT system, and may also be applied to subsequent evolution systems of a 5G NR system, and may also be applied to B5G, 6G, and subsequent evolution systems. In some implementations of the present disclosure, "NR" may also be referred to as a 5G NR system or a 5G system. Among them, the 5G mobile communication system may include non-standalone (NSA) and/or standalone (SA).

The technical solutions provided in implementations of the present disclosure may also be applied to a machine type communication (MTC), a long term evolution-machine (LTE-M), a device-to-device (D2D) network, a machine-to-machine (M2M) network, an IoT network, or other networks. The IoT network may include, for example, an Internet of vehicles. The communication methods in the Internet of vehicles system are collectively referred to as vehicle to X (V2X, X may represent anything). For example, the V2X may include: vehicle-to-vehicle (V2V) communication, vehicle-to-infrastructure (V2I) communication, vehicle-to-pedestrian (V2P) communication, vehicle-to-network (V2N) communication, etc.

### 1) Overview of a scheme for NR UL transmission

In an NR system, UL transmission supports codebook-based transmission (codebook-based PUSCH) and non-codebook-based transmission (non-codebook-based PUSCH). For the codebook-based transmission, a typical procedure includes the following. A terminal device transmits a sounding reference signal (SRS) to a network device. The network device performs UL channel detection according to the SRS transmitted by the UE, and then determines an SRS resource corresponding to transmission of a PUSCH, the number of layers for UL transmission, a precoding matrix, frequency domain resource allocation, etc. The network device indicates the foregoing information to the terminal device via downlink control information (DCI). The terminal device receives the DCI and transmits the PUSCH according to an indication of the DCI.

In an NR protocol and system, 1-port PUSCH transmission, 2-port PUSCH transmission, 4-port PUSCH transmission, and 8-port PUSCH transmission are supported.

In Rel-15, terminals can be classified into three types according to whether UL transmission satisfies coherent characteristics.
*nonCoherent* (non coherent can be used when a UE is described, and *nonCoherent* is used when UE capability is reported): phases corresponding to any two antennas or any two antenna ports cannot maintain a constant relationship (for example, a difference between two phases changes, the difference is difficult to remain unchanged within a certain period, or a variation amplitude of the difference exceeds a certain range within a certain period).
*partialCoherent* (partial coherent can be used when a UE is described, and *partialCoherent* is used when UE capability is reported): all antennas or antenna ports are divided into *X* sets, phases corresponding to antennas or antenna ports in each set can maintain a constant relationship (for example, a difference between multiple phases remains substantially unchanged within a certain period, or a variation amplitude of the difference is within a certain range), but phases corresponding to antennas or antenna ports between different sets cannot maintain a constant relationship.
*fullCoherent* (*fullCoherent* can be used when a UE is described, and *fullCoherent* is used when UE capability is reported): phases corresponding to all antennas or antenna ports can maintain a constant relationship.

The UE can report to the network which of the three capabilities the UE supports.

For a terminal with two antenna ports, the UE generally can be of two types: *nonCoherent* and *fullCoherent.*

For a terminal with four antenna ports, the UE generally can be of three types: *nonCoherent, partialCoherent,* and *fullCoherent.*

In Rel-15, NR supports codebook-based UL transmission. A network indicates a transmit precoding matrix indicator (TPMI) (or a corresponding description is a UL precoding matrix or a UL precoder) via DCI. By selecting an appropriate precoding matrix (assumed to be $\frac{1}{\sqrt{2}} \left[\begin{matrix}1 \\ 1\end{matrix}\right]$ herein), signals transmitted via two antenna ports of the terminal are positively superimposed at a network receiving end, thereby improving reception performance. Therefore, it is necessary to ensure that a difference between phases corresponding to the two antenna ports is controlled within a certain range (shortly referred to as "constant condition" for ease of description) during this period, to ensure that final received signals are positively superimposed. If the difference between the phases corresponding to the two antenna ports exceeds a certain range, it cannot be guaranteed at the receiving end whether the signals transmitted via the two antenna ports are positively superimposed or negatively superimposed, which will affect reception performance.

For a *nonCoherent* 2-antenna UE, the following precoding matrices $\frac{1}{\sqrt{2}} \left[\begin{matrix}1 \\ 0\end{matrix}\right]$ and $\frac{1}{\sqrt{2}} \left[\begin{matrix}0 \\ 1\end{matrix}\right]$ can be used for one data stream (one layer) transmission, and thus both signals of two antenna ports are not required to be transmitted simultaneously.

Based on the foregoing reasons, in Rel-15, UL precoding matrices (or corresponding TPMIs) are classified into different sets, i.e., different codebook subsets. Currently, three different codebook subsets are defined in the protocol.
*fullyAndPartialAndNonCoherent*: can be used for *a fullCoherent* terminal.
*partialAndNonCoherent:* can be used for *a partialCoherent* terminal and a *fullCoherent* terminal.
*nonCoherent:* can be used for a *nonCoherent* terminal, *a partialCoherent* terminal, and *a fullCoherent* terminal.

For a 4-antenna terminal (with four antenna ports), *nonCoherent* is a subset of *partialAndNonCoherent,* and *partialAndNonCoherent* is a subset of *fullyAndPartialAndNonCoherent.*

For a 2-antenna terminal (with two antenna ports), *nonCoherent* is a subset of *fullyAndPartialAndNonCoherent* (no *partialAndNonCoherent).*

### 2) UL transmission power

During UL transmission, in order to ensure transmission quality and reduce UL interference, power control is required. The UE first determines a calculated transmission power according to network configuration information and/or scheduling information (e.g., a frequency domain resource allocation, a transmit power control (TPC) command, a modulation scheme, etc.,) corresponding to the UL transmission. Then, for the calculated transmission power, there are two processing manners depending on different situations. Power scaling is performed, where a scaling factor s is less than or equal to 1. Power scaling is not performed (equivalently, the scaling factor s is 1), for example, 1-port UL transmission, or non-codebook-based UL transmission.

The scaling factor s is determined according to the number of non-zero ports for a transmitted PUSCH and the maximum number of SRS ports supported by the UE (the number of non-zero ports for a PUSCH/the maximum number of SRS ports supported by the UE in one SRS resource).

If each SRS resource in an SRS resource set with usage set to 'codebook' has more than one SRS port, the UE scales a linear value by a ratio of the number of antenna ports with a non-zero PUSCH transmission power to the maximum number of SRS ports supported by the UE in one SRS resource.

For example, for a *nonCoherent* 2-antenna UE, a precoding matrix $\frac{1}{\sqrt{2}} \left[\begin{matrix}1 \\ 0\end{matrix}\right]$ is used. Since a corresponding number of non-zero ports for the PUSCH is 1 and the maximum number of SRS ports supported by the UE in one SRS resource is 2, the scaling factor is 1/2.

For example, for a *nonCoherent* 4-antenna UE, a precoding matrix $\frac{1}{\sqrt{2}} \left[\begin{matrix}1 \\ 0\end{matrix}\right]$ is used. Since a corresponding number of non-zero ports for the PUSCH is 1 and the maximum number of SRS ports supported by the UE in one SRS resource is 4, the scaling factor is 1/4.

### 3) Overview of NR SRS

An SRS is an important reference signal in a 5G/NR system, and is widely used in various functions in an NR system, for example, DL channel state information (CSI) acquisition (UE sounding procedure for DL CSI acquisition); frequency domain scheduling and precoding determination for UL transmission; an antenna switching function; a carrier switching function; a positioning function; cooperating with codebook-based UL transmission; and cooperating with non-codebook-based UL transmission.

The network can configure one or more SRS resource sets for one UE, and each SRS resource set can be configured with one or more SRS resources.

Transmission of an SRS can be classified into periodic SRS transmission, semi-persistent SRS transmission, and aperiodic SRS transmission. Detail descriptions of periodic SRS transmission and semi-persistent SRS transmission are given below.

The periodic SRS transmission refers to a periodically transmitted SRS, and a cycle and a slot offset of the SRS are configured via radio resource control (RRC) signalling. Once receiving a corresponding configuration parameter, a terminal transmits an SRS according to a specific cycle until configuration of the RRC fails. Spatial relation information of the periodic SRS (is implicitly indicated by using a transmission beam) is also configured via RRC signalling. The spatial relation information may indicate a channel state information-reference signal (CSI-RS), a synchronization signal block (SSB), or a reference SRS. The terminal determines a transmission beam of a third SRS resource according to a receiving beam of the indicated CSI-RS/SSB, or determines a transmission beam of a third SRS resource according to a transmission beam of a reference SRS resource.

The semi-persistent SRS transmission is a periodically transmitted SRS, a cycle and a slot offset of the SRS are configured via RRC signalling, but activation signalling and deactivation signalling are carried in a medium access control element (MAC CE). After receiving the activation signalling, a terminal periodically transmits an SRS until the deactivation signalling is received. Spatial relation information (a transmission beam) of the semi-persistent SRS is also carried in the MAC CE that activates the SRS.

After receiving the cycle and the slot offset configured by using RRC, the terminal determines, according to the following formula, a slot that can be used to transmit the SRS:$\left({N}_{slot}^{frame , μ}{n}_{f}+{n}_{s , f}^{μ}-{T}_{offset}\right) {modT}_{SRS} = 0$ where *T*_{SRS} and *T*_{offset} are a configured cycle and a configured offset, respectively, and *n*_{f} and ${n}_{s , f}^{μ}$ are a radio frame and a slot number, respectively.

### 4) Aperiodic SRS Transmission

The aperiodic SRS transmission is introduced in the NR system, and a base station can trigger SRS transmission of the terminal via UL or DL DCI. Triggering signalling used to trigger aperiodic SRS transmission may be carried in DCI for scheduling a PUSCH or a PDSCH in a UE-specific search space, or may be carried in a DCI format 2_3 in a common search space. The DCI format 2_3 can be used not only to trigger the aperiodic SRS transmission, but also to configure a TPC command of an SRS on a set of UEs or a set of carriers.

**Table 1**

| Values of SRS request field | Triggered aperiodic SRS resource set(s) for DCI format 0_1, 1_0, and 2_3 configured with higher layer parameter *srs-TPC-PDCCH-Group* set to 'typeB' |
|---|---|
| 00 | No aperiodic SRS resource set triggered |
| 01 | SRS resource set(s) configured with higher layer parameter *aperiodicSRS-ResourceTrigger* set to 1 |
| 10 | SRS resource set(s) configured with higher layer parameter *aperiodicSRS-Resource Trigger* set to 2 |
| 11 | SRS resource set(s) configured with higher layer parameter *aperiodicSRS-ResourceTrigger* set to 3 |

After receiving triggering signalling (e.g., DCI) of the aperiodic SRS, the terminal performs SRS transmission on an SRS resource set indicated by the triggering signalling. A slot offset between the triggering signalling and the SRS transmission is configured via higher layer signalling (RRC). A network side indicates, to the terminal via the higher layer signalling, a configuration parameter(s) of each SRS resource set in advance, including a time-frequency resource, a sequence parameter, a power control parameter, etc. In addition, for each SRS resource in the triggered SRS resource set, the terminal may further determine, according to spatial relation information of the resource, a transmission beam used to transmit an SRS on the resource. The information is configured for each SRS resource via RRC.

An SRS resource set contains one or more SRS resources, and an SRS resource may be 1-port, 2-port, 4-port, or 8-port, and may be transmitted on 1, 2, 4, 8, or 12 orthogonal frequency division multiplexing (OFDM) symbols.

PUSCH transmission supports 1-port, 2-port, 4-port, and 8-port transmission. At present, one or two UL transmission antennas are mainly supported in an actual commercial terminal. According to optimization of terminal design schemes and with the advancement of hardware technology, future ordinary commercial terminals can support three UL transmission antennas (or three UL transmission radio frequency (RF) channels). However, current protocols cannot efficiently support such a hardware architecture (e.g., for such terminals, current protocols can only support 2-port UL transmission, up to 2-layer transmission). In the present disclosure, a scheme for 3-port PUSCH transmission and power control is proposed for a UE supporting three UL transmission RF channels in one band.

Reference may be made to FIG. 2, which illustrates a flowchart of a method for PUSCH transmission provided in an implementation of the present disclosure. The method can be performed by a terminal device, where the terminal device may be the terminal device 120 or the terminal device 130 in the network architecture as illustrated in FIG. 1. The method may include the following.

At S210, a PUSCH is transmitted via a precoding matrix, where the precoding matrix corresponds to one 3-port TPMI or corresponds to one 3-port codebook.

The 3-port TPMI/codebook means that the TPMI/codebook corresponds to three antenna ports, or in other words, the TPMI/codebook contains information/parameters respectively corresponding to three antenna ports.

The antenna port is a logical concept. If "a wireless channel over which a symbol on another antenna port is transmitted" can be inferred from "a wireless channel over which a symbol on one antenna port is transmitted", these two antenna ports can be considered the same antenna port.

In summary, according to the solution as illustrated in implementations of the present disclosure, the terminal device transmits the PUSCH via the precoding matrix corresponding to one 3-port TPMI or one 3-port codebook, such that 3-port PUSCH transmission can be supported by the network, thereby expanding the applicable scope of PUSCH transmission.

Reference may be made to FIG. 3, which illustrates a flowchart of a method for PUSCH transmission provided in an implementation of the present disclosure. The method can be performed by a network device, where the network device can be the network device 110 in the network architecture as illustrated in FIG. 1. The method may include the following.

At S310, a PUSCH transmitted by a terminal device is received via a precoding matrix, where the precoding matrix corresponds to one 3-port TPMI or corresponds to one 3-port codebook.

In summary, according to the solution as illustrated in implementations of the present disclosure, the network device can receive the PUSCH transmitted by the terminal device via the precoding matrix corresponding to one 3-port TPMI or one 3-port codebook, such that 3-port PUSCH transmission can be supported by the network, thereby expanding the applicable scope of PUSCH transmission.

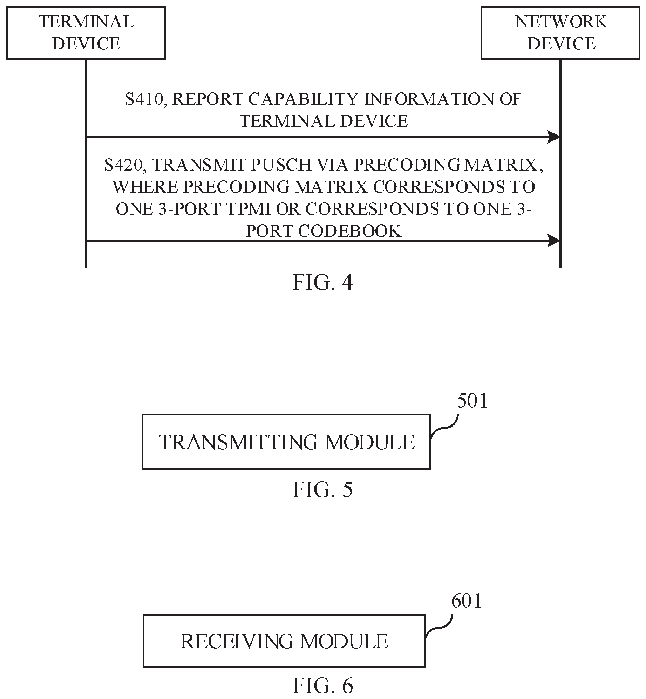

Reference may be made to FIG. 4, which is a flowchart illustrating a method for PUSCH transmission provided in an implementation of the present disclosure. The method can be performed through interaction between a terminal device and a network device, where the terminal device may be the terminal device 120 or the terminal device 130 in the network architecture as illustrated in FIG. 1, and the network device may be the network device 110 in the network architecture as illustrated in FIG. 1. The method may include the following.

At S410, the terminal device reports capability information of the terminal device to the network device, and the network device receives the capability information reported by the terminal device.

The capability information indicates that the terminal device supports 3-port PUSCH transmission, or indicates that the terminal device supports PUSCH transmission using a 3-port TPMI or a 3-port codebook, or indicates that the terminal device supports an SRS resource using three ports, or indicates that the terminal device supports up to 3-layer PUSCH.

The terminal device reports terminal capability to the network device, where the terminal capability indicates support for 3-port PUSCH transmission, or support for PUSCH transmission using a 3-port TPMI (codebook or precoding matrix), or support for one SRS resource using three ports, or support for up to 3-port SRS, or support for up to 3-layer PUSCH (or up to 3-layer UL transmission).

In some implementations, the capability information is transmitted via at least one of the following signaling: RRC signaling or an MAC CE.

Optionally, the terminal capability is transmitted via RRC signaling or an MAC CE.

In some implementations, the capability information is reported per band; or the capability information is reported independently per band combination; or the capability information is reported independently per band per band combination; or the capability information is reported independently per carrier per band per band combination; or the capability information is reported per frequency range (FR); or the capability information is reported per device.

Optionally, the terminal capability is reported per band (i.e., different bands can be used to independently report corresponding capabilities). In this case, independently reporting by using different bands can enable a terminal to achieve greater flexibility. For example, the terminal may support this function on a specific band or some bands, and does not support this function on another band, such that more terminals may be allowed to support this new function.

Optionally, the terminal capability is reported independently per band combination. In this case, independently reporting by using different band combinations can enable the terminal to achieve greater flexibility. For example, the terminal may not support this function on a specific band combination, but support this function on another band combination, such that more terminals may be allowed to support this new function.

Optionally, the terminal capability is reported independently per band per band combination (i.e., each band in a different band combination can be used for independently reporting). In this case, independently reporting by using different band combinations may enable the terminal to achieve greater flexibility. For example, the terminal may not support this function on specific carrier aggregation (CA), but support this function on some bands in another CA combination, such that more terminals may be allowed to support this new function.

Optionally, the terminal capability is reported independently per carrier per band per band combination (i.e., a different component carrier (CC) in a different band in a different band combination can be used for independently reporting, per CC per band per band combination, or feature set per carrier (FSPC)). In this case, a different band combination is used for independently reporting, and a different carrier on a band may also be used for independently reporting, such that the terminal may achieve greater flexibility, and thus more terminals may be allowed to support this new function.

Optionally, the terminal capability is reported per FR (i.e., different FRs may be used for independently reporting, i.e., FR1 and FR2 may be used for independently reporting). In this case, different FRs are used for independently reporting, such that the terminal may achieve greater flexibility. For example, the terminal does not support this function at a low frequency (such as FR1), but supports this function at a high frequency (such as FR2), such that more terminals may be allowed to support this new function.

Optionally, the terminal capability is reported per UE (i.e., if a UE reports the capability, the UE may support the capability on each band). In this case, signalling overheads of reporting the terminal capability can be reduced.

At S420, the terminal device transmits a PUSCH via a precoding matrix, and correspondingly, the network device receives the PUSCH transmitted by the terminal device via the precoding matrix, where the precoding matrix corresponds to one 3-port TPMI or corresponds to one 3-port codebook.

The terminal device transmits, according to scheduling information from the network device, the PUSCH by using the precoding matrix, where the precoding matrix corresponds to one 3-port TPMI or corresponds to one 3-port codebook. In this case, up to 3 layers can be supported, thereby achieving a higher peak rate than existing commercial terminals.

In some implementations, the precoding matrix contains three rows of matrix parameters, and the three rows of matrix parameters are in one-to-one correspondence with three transmission ports.

Optionally, the precoding matrix may contain three rows. In this case, a new codebook is designed, allowing more optimization for 3 transport uplink multiple-input multiple-output (3Tx UL MIMO).

In some implementations, the precoding matrix corresponds to the first three rows of parameters or the last three rows of parameters in a 4-port TPMI. Alternatively, the precoding matrix corresponds to the first three rows of parameters or the last three rows of parameters in a 4-port codebook.

Optionally, the precoding matrix corresponds to the first three rows or the last three rows of a 4-port TPMI or a 4-port codebook. In this case, three rows of the existing 4-port codebook can be used, such that the codebook design can be simplified, thereby reducing standardization complexity.

In some implementations, the PUSCH is scheduled by *ConfiguredGrantConfig* or *semiPersistentOnPUSCH* that is configured by RRC, where a value of a transmission configuration *txConfig* in *PUSCH-Config* configured by RRC is set to 'codebook'.

Optionally, the PUSCH is scheduled by *ConfiguredGrantConfig* or *semiPersistentOnPUSCH* that is configured by RRC, where the value of *txConfig* in *PUSCH-Config* configured by RRC is set to 'codebook'.

Optionally, the PUSCH may be scheduled by DCI.

In some implementations, the method further includes the following. The network device sends first indication information to the terminal device, and the terminal device receives the first indication information, where the first indication information indicates that the terminal device is to perform 3-port PUSCH transmission.

The terminal device can receive the first indication information sent by the network device. In this case, whether the PUSCH is 3Tx UL MIMO or other forms of UL MIMO can be flexibly controlled.

In some implementations, the first indication information indicates that the terminal device is to perform PUSCH transmission using a 3-port TPMI or a 3-port codebook.

Optionally, the first indication information indicates that the terminal device is to perform 3-port PUSCH transmission. Optionally, the first indication information indicates that the first terminal device is to perform PUSCH transmission using a 3-port TPMI or a 3-port codebook.

In some implementations, the method further includes the following. The network device sends second indication information to the terminal device, and the terminal device receives the second indication information, where the second indication information indicates one or more SRS resource sets, each of the one or more SRS resource sets contains one or more SRS resources, and usage of each of the one or more SRS resource sets is configured as 'codebook'.

The terminal device receives the second indication information sent by the network device, where the second indication information indicates a first SRS resource set, the first SRS resource set contains one or more SRS resources, and usage of the first SRS resource set is configured as 'codebook'.

In some implementations, each of all or part of the one or more SRS resources is a 3-port SRS resource.

Optionally, the SRS resource may contain three ports (three antenna ports), i.e., a 3-port SRS resource. In this case, a 3-port SRS resource is designed, allowing for better optimization.

The 3-port SRS resource may mean that the SRS resource corresponds to three antenna ports. For example, the SRS resource contains three parts of resources, and the three parts of resources are in one-to-one correspondence with the three ports, or in other words, the three parts of resources are used for three different antenna ports, respectively.

In some implementations, each of all or part of the one or more SRS resources is a 4-port SRS resource.

Optionally, the SRS resource may contain four ports (four antenna ports), i.e., a 4-port SRS resource, and the four ports are denoted as port 0, port 1, port 2, and port 3, respectively. In this case, three ports of the existing 4-port SRS resource can be used, such that SRS design can be simplified, thereby reducing standardization complexity.

In some implementations, the method further includes the following. The network device sends third indication information to the terminal device, and the terminal device receives the third indication information, where the third indication information indicates that the terminal device is to use three ports of the 4-port SRS resource.

The terminal device can receive the third indication information sent by the network device, where the third indication information indicates that three ports of a first SRS resource are to be used. In this case, signaling is relatively flexible, allowing flexible indication of whether three ports or four ports are to be used.

For example, port 0, port 1, and port 2 are used for the SRS resource, or port 0, port 1, and port 2 of the SRS resource correspond to a PUSCH or correspond to a precoding matrix used for the PUSCH.

For another example, port 1, port 2, and port 3 are used for the SRS resource, or port 1, port 2, and port 3 of the SRS resource correspond to the PUSCH or correspond to the precoding matrix used for the PUSCH.

For another example, port 0, port 1, and port 3 are used for the SRS resource, or port 0, port 1, and port 3 of the first SRS resource correspond to the PUSCH or correspond to the precoding matrix used for the PUSCH.

For another example, port 0, port 2, and port 3 are used for the SRS resource, or port 0, port 2, and port 3 of the first SRS resource correspond to the PUSCH or correspond to the precoding matrix used for the PUSCH.

In some implementations, the third indication information is carried in configuration information of an SRS resource set, or the third indication information is carried in configuration information of an SRS resource.

The third indication information may be carried in the configuration information of the SRS resource set or the configuration information of the SRS resource. In this case, if the third indication information is carried in a set configuration, signaling overhead can be saved; and if the third indication information is carried in a resource configuration, more space can be provided for future expansion.

In some implementations, the third indication information and the first indication information are the same indication information, or the third indication information and the first indication information are carried in the same signaling.

The third indication information and the first indication information are the same indication information, or the third indication information and the first indication information are transmitted via the same signaling, which can save signaling overhead.

In some implementations, the method further includes the following. The network device sends fourth indication information to the terminal device, and the terminal device receives the fourth indication information, where the fourth indication information indicates three used ports of the 4-port SRS resource, or indicates three ports, corresponding to the PUSCH, of the 4-port SRS resource, or indicates three ports, corresponding to the precoding matrix used for the PUSCH, of the 4-port SRS resource.

The terminal device receives the fourth indication information sent by the network device, where the fourth indication information indicates which three ports of the SRS resource are to be used, or indicates which three ports of the SRS resource are to correspond to the PUSCH, or indicates which three ports of the SRS resource are to correspond to the precoding matrix used for the PUSCH. This solution can flexibly indicate which three ports correspond to 3Tx UL MIMO transmission, thereby providing space for optimization of network configuration.

In some implementations, the fourth indication information is carried in configuration information of an SRS resource set, or the fourth indication information is carried in configuration information of an SRS resource.

The fourth indication information may be carried in the configuration information of the SRS resource set or the configuration information of the SRS resource. In this case, if the fourth indication information is carried in a set configuration, signaling overhead can be saved; and if the fourth indication information is carried in a resource configuration, more space can be provided for future expansion.

In some implementations, the fourth indication information and the first indication information are the same indication information, or the fourth indication information and the first indication information are carried in the same signaling.

In this solution, the fourth indication information and the first indication information are the same indication information, or the fourth indication information and the first indication information are transmitted via the same signaling, which can save signaling overhead.

In some implementations, the method further includes the following. The network device sends fifth indication information to the terminal device, and the terminal device receives the fifth indication information, where the fifth indication information indicates an unused port of the 4-port SRS resource, or indicates a port, not used for or not corresponding to the PUSCH, of the 4-port SRS resource, or indicates a port, not used for or not corresponding to the precoding matrix used for the PUSCH, of the 4-port SRS resource.

The terminal device receives the fifth indication information sent by the network device, where the fifth indication information indicates which port of the SRS resource is not used, or indicates which port of the SRS resource does not correspond to (or is not used for) the PUSCH, or indicates which port of the SRS resource does not correspond to (or is not used for) the precoding matrix used for the PUSCH. This solution can flexibly indicate which three ports correspond to 3Tx UL MIMO transmission, thereby providing space for optimization of network configuration. Compared with the previous solution, this solution can reduce signaling overhead.

In some implementations, the fifth indication information is carried in configuration information of an SRS resource set, or the fifth indication information is carried in configuration information of an SRS resource.

The fifth indication information may be carried in the configuration information of the SRS resource set or the configuration information of the SRS resource. In this case, if the fifth indication information is carried in a set configuration, signaling overhead can be saved; and if the fifth indication information is carried in a resource configuration, more space can be provided for future expansion.

In some implementations, the fifth indication information and the first indication information are the same indication information, or the fifth indication information and the first indication information are carried in the same signaling.

The fifth indication information and the first indication information are the same indication information, or the fifth indication information and the first indication information are transmitted via the same signaling, which can save signaling overhead.

In some implementations, each of all or part of the one or more SRS resources is formed by one single-port SRS resource and one two-port SRS resource.

In some implementations, each of all or part of the one or more SRS resources is formed by three single-port SRS resources.

In some implementations, the method further includes the following. A transmission power of the PUSCH is scaled by a scaling factor. The terminal device may process the transmission power of the PUSCH by a scaling factor.

In some implementations, the scaling factor is a ratio of the number of non-zero ports for the PUSCH to 3.

The scaling factor is $\frac{the number of non - zero ports for a first PUSCH}{3}$, i.e., the number of non-zero ports for the first PUSCH/3 (a ratio of the number of antenna ports with a non-zero PUSCH transmission power to 3).

The solutions of the present disclosure are described in detail below with specific implementations.

A first device (corresponding to the terminal device, and the following is described by taking a first terminal device as an example) receives second indication information sent by a second device (corresponding to the network device or a second terminal device, and for ease of description, the following is described by taking a first network device as an example), where the second indication information indicates a first SRS resource set, and the first SRS resource set contains one or more first SRS resources. The first SRS resource set is used for codebook-based UL transmission (e.g., codebook-based PUSCH), or in other words, usage of the first SRS resource set is configured as 'codebook'.

For example, in a 5G system, the first SRS resource set is configured (sent to the first terminal device) by the second device via RRC signaling *SRS-ResourceSet,* and the SRS resources are configured via RRC signaling *SRS-Resource.* Usage (this field is named as *usage*) of *SRS-ResourceSet* is configured as 'codebook'.

Optionally, the second indication information may indicate multiple first SRS resource sets.

The first terminal device transmits, according to scheduling information from the first network device, a first PUSCH by using a first precoding matrix, where the first precoding matrix corresponds to one 3-port TPMI or corresponds to one 3-port codebook. The first terminal device processes a transmission power of the first PUSCH by a first scaling factor.

For example, in an NR system, after *P*_{PUSCH,*b,f,c*} (*i,j,q_{d},l*) is calculated according to Section 7.1 in TS 38.213, a linear value corresponding to *P*_{PUSCH,*b,f,c*}(*i,j,q_{d},l*) is then multiplied by a scaling factor (e.g., the first scaling factor), to obtain a final calculated power value.

Optionally, the first PUSCH is scheduled by first DCI.

Optionally, the first PUSCH is scheduled by *ConfiguredGrantConfig* or *semiPersistentOnPUSCH* that is configured by RRC, where a value of *txConfig* in *PUSCH-Config* configured by RRC is set to 'codebook'.

The first terminal device receives first indication information sent by the first network device.

Optionally, the first indication information indicates that the first terminal device is to perform 3-port PUSCH transmission.

Optionally, the first indication information indicates that the first terminal device is to perform PUSCH transmission using a 3-port TPMI (codebook or precoding matrix).

Optionally, the first indication information indicates that the first terminal device is to perform 3-port SRS transmission.

For the first indication information, there may be different options. Some examples are as follows (not limited to the following examples, and there may be other implementations).

Option 1, the first indication information is carried in configuration information of a bandwidth part (BWP, the BWP concept in the existing NR system, and reference may be made to 38.211 and 38.214). For example, the first indication information is carried in RRC signaling *BWP-UplinkDedicated* or *BWP-Uplink.* In this case, a different BWP can independently be configured with multi-port PUSCH, such that the network can have great flexibility, thereby enabling a good compromise between transmission performance and power consumption.

Option 2, the first indication information is carried in configuration information of a PUSCH. For example, the first indication information is carried in RRC signaling *PUSCH-Config.*

Option 3, the first indication information is carried in configuration information of configured grant (CG). For example, the first indication information is carried in RRC signaling *ConfiguredGrantConfig.* In this case, data scheduled by CG can also flexibly indicate a 3-port PUSCH.

Option 4, the first indication information is carried in configuration information of an SRS resource set. For example, the first indication information is carried in RRC signaling *SRS-ResourceSet.* In this case, the first indication information can be the same information as some of the following indication information, thereby saving signaling overhead.

Option 5, the first indication information is carried in configuration information of an SRS resource. For example, the first indication information is carried in RRC signaling *SRS-Resource.* In this case, the first indication information can be the same information as some of the following indication information, thereby saving signaling overhead.

Option 6, the first indication information is carried in configuration information of an SRS. For example, the first indication information is carried in RRC signaling *SRS-Config.*

Option 7, the first indication information is carried in configuration information of a cell. For example, the first indication information is carried in RRC signaling *ServingCellConfig* or *UplinkConfig.* In this case, the cell is configured with multi-port PUSCH transmission, thereby simplifying product implementation.

### SRS implementation 1

At least one of the one or more first SRS resources or all of the one or more first SRS resources each contain three ports (three antenna ports), i.e., each of the at least one or all of the first SRS resources is a 3-port SRS resource (or an SRS resource with three antenna ports).

A first scaling factor is a ratio of the number of antenna ports with a non-zero PUSCH transmission power to the maximum number of SRS ports supported by the UE (i.e., $\frac{the number of non - zero ports for a first PUSCH}{the maximum number of SRS ports supported by the UE}$, the number of non-zero ports for the first PUSCH/the maximum number of SRS ports supported by the UE).

### SRS implementation 2

At least one of the one or more first SRS resources or all of the one or more first SRS resources each contain four ports (four antenna ports), i.e., each of the at least one or all of the first SRS resources is a 4-port SRS resource (or an SRS resource with four antenna ports). For ease of description, the four ports are denoted as port 0, port 1, port 2, and port 3, respectively.

Optionally, in this case, a value of *nrofSRS-ports* in configuration signaling *SRS-Resource* corresponding to the first SRS resources is set to 'ports4'.

Which ports of the 4-port SRS resource correspond to 3-port PUSCH transmission or correspond to a 3-port precoding matrix may have different implementations, and some examples are as follows.

Option 1, the first terminal device receives third indication information sent by the first network device, where the third indication information indicates that three ports of a first SRS resource are to be used, or indicates that three ports of the first SRS resource are to correspond to a PUSCH, or indicates that three ports of the first SRS resource are to correspond to a TPMI used for the PUSCH. Which three ports are to be used can be pre-defined.

For example, port 0, port 1, and port 2 are used for the first SRS resource, or port 0, port 1, and port 2 of the first SRS resource correspond to the PUSCH (e.g., the first PUSCH) or correspond to a precoding matrix used for the PUSCH (e.g., the first precoding matrix).

For example, port 1, port 2, and port 3 are used for the first SRS resource, or port 1, port 2, and port 3 of the first SRS resource correspond to the PUSCH (e.g., the first PUSCH) or correspond to the precoding matrix used for the PUSCH (e.g., the first precoding matrix).

For example, port 0, port 1, and port 3 are used for the first SRS resource, or port 0, port 1, and port 3 of the first SRS resource correspond to the PUSCH (e.g., the first PUSCH) or correspond to the precoding matrix used for the PUSCH (e.g., the first precoding matrix).

For example, port 0, port 2, and port 3 are used for the first SRS resource, or port 0, port 2, and port 3 of the first SRS resource correspond to the PUSCH (e.g., the first PUSCH) or correspond to the precoding matrix used for the PUSCH (e.g., the first precoding matrix).

Optionally, the third indication information is carried in configuration information of a first SRS resource set. Optionally, when the third indication information is carried in the configuration information of the first SRS resource set, a field *nrofSRS-ports* in configuration signaling *SRS-Resource* corresponding to SRS resources in the first SRS resource set is ignored.

Optionally, the third indication information is carried in configuration information of a first SRS resource. Optionally, when the third indication information is carried in the configuration information of the first SRS resource, a field *nrofSRS-ports* in configuration signaling *SRS-Resource* corresponding to the first SRS resource is ignored.

Optionally, the third indication information and the first indication information are the same information, or the third indication information and the first indication information are transmitted via the same signaling.

Optionally, the third indication information and the first indication information are different information, or the third indication information and the first indication information are transmitted via different signaling.

Option 2, the first terminal device receives fourth indication information sent by the first network device, where the fourth indication information indicates which three ports of the first SRS resource are to be used, or indicates which three ports of the first SRS resource are to correspond to the PUSCH (e.g., the first PUSCH), or indicates which three ports of the first SRS resource are to correspond to the precoding matrix used for the PUSCH (e.g., the first precoding matrix).

Optionally, the fourth indication information may indicate which three ports among the four ports are to be used by means of a bitmap. For example, if a value of a bit at a corresponding position in the bitmap is 1, it indicates that a corresponding port belongs to the three ports to be used.

Optionally, the fourth indication information indicates port identifiers corresponding to the three ports, and these three ports correspond to the PUSCH.

Optionally, the fourth indication information indicates a port set, and ports (e.g., three ports) contained in the port set correspond to the PUSCH.

Optionally, the fourth indication information is carried in configuration information of a first SRS resource set. Optionally, when the fourth indication information is carried in the configuration information of the first SRS resource set, a field *nrofSRS-ports* in configuration signaling *SRS-Resource* corresponding to SRS resources in the first SRS resource set is ignored.

Optionally, the fourth indication information is carried in configuration information of a first SRS resource. Optionally, when the fourth indication information is carried in the configuration information of the first SRS resource, a field *nrofSRS-ports* in configuration signaling *SRS-Resource* corresponding to the first SRS resource is ignored.

Optionally, the fourth indication information and the first indication information are the same information, or the fourth indication information and the first indication information are transmitted via the same signaling.

Optionally, the fourth indication information and the first indication information are different information, or the fourth indication information and the first indication information are transmitted via different signaling.

Option 3, the first terminal device receives fifth indication information sent by the first network device, where the fifth indication information indicates which port of the first SRS resource is not used, or indicates which port of the first SRS resource does not correspond to (or is not used for) the PUSCH (e.g., the first PUSCH), or indicates which port of the first SRS resource does not correspond to (or is not used for) the precoding matrix used for the PUSCH (e.g., the first precoding matrix).

Optionally, the fifth indication information may indicate which port among the four ports is not used by means of a bitmap. For example, if a value of a bit at a corresponding position in the bitmap is 1, it indicates that a corresponding port is not used.

Optionally, the fifth indication information indicates a port identifier corresponding to one port, and the port does not correspond to the PUSCH.

Optionally, the fifth indication information is carried in configuration information of a first SRS resource set. Optionally, when the fifth indication information is carried in the configuration information of the first SRS resource set, a field *nrofSRS-ports* in configuration signaling *SRS-Resource* corresponding to SRS resources in the first SRS resource set is ignored.

Optionally, the fifth indication information is carried in configuration information of a first SRS resource. Optionally, when the fifth indication information is carried in the configuration information of the first SRS resource, a field *nrofSRS-ports* in configuration signaling *SRS-Resource* corresponding to the first SRS resource is ignored.

Optionally, the fifth indication information and the first indication information are the same information, or the fifth indication information and the first indication information are transmitted via the same signaling.

Optionally, the fifth indication information and the first indication information are different information, or the fifth indication information and the first indication information are transmitted via different signaling.

Optionally, for each of the options, when the UE sends the SRS resource, the UE also sends only the three used ports.

When the first terminal device receives the first indication information, the first scaling factor is a ratio of the number of antenna ports with a non-zero PUSCH transmission power to 3 (i.e., $\frac{the number of non - zero ports for a first PUSCH}{3}$, the number of non-zero ports for the first PUSCH/3).

Alternatively, the first scaling factor is a ratio of the number of antenna ports with a non-zero PUSCH transmission power to the maximum number of SRS ports supported by the UE (i.e., $\frac{the number of non - zero ports for a first PUSCH}{the maximum number of SRS ports supported by the UE}$, the number of non-zero ports for the first PUSCH/the maximum number of SRS ports supported by the UE), where the maximum number of SRS ports supported by the UE is 3.

Alternatively, the first scaling factor is a ratio of the number of antenna ports with a non-zero PUSCH transmission power to 4 (i.e., $\frac{the number of non - zero ports for a first PUSCH}{4}$, the number of non-zero ports for the first PUSCH/4).

### SRS implementation 3

At least one of the one or more first SRS resources or each of all of the one or more first SRS resources is formed by one 1-port SRS resource (single-port SRS resource) and one 2-port SRS resource (two-port SRS resource, denoted as port 0 and port 1, respectively). In this case, multiple existing SRS resources are combined, such that design workload can be reduced.

How ports of both the single-port SRS resource and the 2-port SRS resource correspond to 3-port PUSCH transmission or correspond to a 3-port precoding matrix may have different implementations, and some examples are as follows.

Option 1, a port of the single-port SRS resource and port 0 and port 1 of the 2-port SRS resource correspond to port 0, port 1, and port 2 for the PUSCH, respectively, and/or correspond to row 0, row 1, and row 2 of the precoding matrix corresponding to the PUSCH, respectively.

Option 2: port 0 and port 1 of the 2-port SRS resource and the port of the single-port SRS resource correspond to port 0, port 1, and port 2 for the PUSCH, respectively, and/or correspond to row 0, row 1, and row 2 of the precoding matrix corresponding to the PUSCH, respectively.

Option 3, the port of the single-port SRS resource and port 1 and port 0 of the 2-port SRS resource correspond to port 0, port 1, and port 2 for the PUSCH, respectively, and/or correspond to row 0, row 1, and row 2 of the precoding matrix corresponding to the PUSCH, respectively.

Option 4, port 1 and port 0 of the 2-port SRS resource and the port of the single-port SRS resource correspond to port 0, port 1, and port 2 for the PUSCH, respectively, and/or correspond to row 0, row 1, and row 2 of the precoding matrix corresponding to the PUSCH, respectively.

Option 5, if the single-port SRS resource is positioned earlier in a signaling corresponding to the second indication information, the port of the single-port SRS resource corresponds to port 0 for the PUSCH and/or corresponds to row 0 of the precoding matrix corresponding to the PUSCH, and the ports of the 2-port SRS resource correspond to port 1 and port 2 for the PUSCH and/or correspond to row 1 and row 2 of the precoding matrix corresponding to the PUSCH.

Option 6, if the 2-port SRS resource is positioned earlier in the signaling corresponding to the second indication information, the ports of the 2-port SRS resource correspond to port 0 and port 1 for the PUSCH and/or correspond to row 0 and row 1 of the precoding matrix corresponding to the PUSCH, and the port of the single-port SRS resource corresponds to port 2 for the PUSCH and/or corresponds to row 2 of the precoding matrix corresponding to the PUSCH.

When the first terminal device receives the first indication information, the first scaling factor is a ratio of the number of antenna ports with a non-zero PUSCH transmission power to 3 (i.e., $\frac{the number of non - zero ports for a first PUSCH}{3}$, the number of non-zero ports for the first PUSCH/3).

### SRS implementation 4

At least one of the one or more first SRS resources or each of all of the one or more first SRS resources is formed by three 1-port SRS resources (single-port SRS resources). In this case, multiple existing SRS resources are combined, such that design workload can be reduced.

Optionally, if in signaling corresponding to the second indication information, a port of a single-port SRS resource positioned earliest in the signaling corresponds to port 0 for the PUSCH and/or corresponds to row 0 of the precoding matrix corresponding to the PUSCH; a port of a single-port SRS resource positioned second earliest in the signaling corresponds to port 1 for the PUSCH and/or corresponds to row 1 of the precoding matrix corresponding to the PUSCH; and a port of a single-port SRS resource positioned latest in the signaling corresponds to port 2 for the PUSCH and/or corresponds to row 2 of the precoding matrix corresponding to the PUSCH.

Optionally, if in signaling corresponding to the second indication information, a port of a single-port SRS resource positioned latest in the signaling corresponds to port 0 for the PUSCH and/or corresponds to row 0 of the precoding matrix corresponding to the PUSCH; a port of a single-port SRS resource positioned second earliest in the signaling corresponds to port 1 for the PUSCH and/or corresponds to row 1 of the precoding matrix corresponding to the PUSCH; and a port of a single-port SRS resource positioned earliest in the signaling corresponds to port 2 for the PUSCH and/or corresponds to row 2 of the precoding matrix corresponding to the PUSCH.

When the first terminal device receives the first indication information, the first scaling factor is a ratio of the number of antenna ports with a non-zero PUSCH transmission power to 3 (i.e., $\frac{the number of non - zero ports for a first PUSCH}{3}$, the number of non-zero ports for the first PUSCH/3).

### TPMI implementation 1

Optionally, the first precoding matrix contains three rows. In the following examples, the precoding matrix (referred to as "precoding" or "codebook") has a coefficient (e.g., may be 1/sqrt(3) or $1 / \sqrt{3}$, or may be other coefficients such as $j / \sqrt{3}$, where j is an imaginary part of a complex number). For ease of description, this coefficient is omitted in the examples.

The first precoding matrix may be one of the following sets or a subset composed of some members of the following sets: $\left[\begin{matrix}1 \\ 0 \\ 0\end{matrix}\right] \left[\begin{matrix}0 \\ 1 \\ 0\end{matrix}\right] \left[\begin{matrix}0 \\ 0 \\ 1\end{matrix}\right] \left[\begin{matrix}1 & 0 \\ 0 & 1 \\ 0 & 0\end{matrix}\right] \left[\begin{matrix}1 & 0 \\ 0 & 0 \\ 0 & 1\end{matrix}\right] \left[\begin{matrix}0 & 0 \\ 1 & 0 \\ 0 & 1\end{matrix}\right] \left[\begin{matrix}1 & 0 & 0 \\ 0 & 1 & 0 \\ 0 & 0 & 1\end{matrix}\right]$

The above can be further extended. For example, one or more members of the foregoing sets may have their columns multiplied by a correlation coefficient (e.g., a coefficient with a modulus/amplitude of 1), to obtain a new member or to replace an existing member. For example, the fourth member is taken as an example, and the second column of the fourth member is multiplied by j, to obtain $\left[\begin{matrix}1 & 0 \\ 0 & j \\ 0 & 0\end{matrix}\right]$ that may be added as a new member to the foregoing sets or may replace the fourth member.

If the first precoding matrix is $\left[\begin{matrix}1 \\ 0 \\ 0\end{matrix}\right]$, the first scaling factor is 1/3 or 1/4. If the first precoding matrix is $\left[\begin{matrix}1 & 0 \\ 0 & 1 \\ 0 & 0\end{matrix}\right]$, the first scaling factor is 2/3 or 2/4.

### TPMI implementation 2

Optionally, the first precoding matrix corresponds to three rows of a 4-port TPMI or a 4-port codebook. For example, the three rows may be the first three rows; the last three rows; row 0, row 1, and row 3; or row 1, row 2, and row 3 (for example, four rows are denoted as 0, 1, 2, and 3, respectively).

Optionally, the first terminal device receives sixth indication information sent by the first network device, where the sixth indication information indicates one 4-port TPMI (denoted as a second TPMI). The second TPMI corresponds to a second precoding matrix (for example, four rows are denoted as 0, 1, 2, and 3, respectively). The 4-port TPMI or the second precoding matrix can be implemented as in TS 38.211 (typically, part of a 4-port TPMI or a 4-port precoding matrix is used in TS 38.211).

Optionally, the sixth indication information may be transmitted via one or more of DCI signaling, MAC CE signaling, and RRC signaling.

Which rows of the second precoding matrix are used for first PUSCH transmission is pre-defined, or which rows of the second precoding matrix correspond to the first precoding matrix is pre-defined. In this case, signaling overhead can be reduced compared with a scheme for network indication below.

Row 0, row 1, and row 2 of the second precoding matrix are used for the first PUSCH transmission, or row 0, row 1, and row 2 of the second precoding matrix correspond to the first precoding matrix; or row 0, row 1, and row 3 of the second precoding matrix are used for the first PUSCH transmission, or row 0, row 1, and row 3 of the second precoding matrix correspond to the first precoding matrix; or row 0, row 2, row 3 of the second precoding matrix are used for the first PUSCH transmission, or row 0, row 2, and row 3 of the second precoding matrix correspond to the first precoding matrix; or row 1, row 2, and row 3 of the second precoding matrix are used for the first PUSCH transmission, or row 1, row 2, and row 3 of the second precoding matrix correspond to the first precoding matrix.

Optionally, the first terminal device receives seventh indication information sent by the first network device, where the seventh indication information indicates which three rows of the second precoding matrix are to be used for the first PUSCH transmission, or indicates which three rows of the second precoding matrix are to correspond to the first precoding matrix. In this case, the network can flexibly indicate which rows are to be used for 3-port PUSCH transmission, thereby providing space for network optimization configuration.

Optionally, the seventh indication information may indicate which three rows among the four rows are to be used by means of a bitmap. For example, if a value of a bit at a corresponding position in the bitmap is 1, it indicates that a corresponding port belongs to the three ports to be used.

Optionally, the seventh indication information indicates row identifiers corresponding to the three rows, and these three rows correspond to the PUSCH.

Optionally, the seventh indication information indicates a row set, and rows (e.g., three rows) contained in the row set correspond to the PUSCH.

Optionally, the seventh indication information and the fourth indication information are the same information. In this case, available SRS ports correspond to available rows of the second precoding matrix according to a certain rule. For example, if port *x*, port *y*, and port *z* of the SRS resource correspond to the PUSCH or port *x*, port *y*, and port *z* are used, row *x*, row *y*, and row *z* of the second precoding matrix correspond to the PUSCH, or row *x*, row *y*, and row *z* of the second precoding matrix correspond to the precoding matrix used for the PUSCH (e.g., the first precoding matrix).

Optionally, the seventh indication information and the fourth indication information are transmitted via the same signaling.

The first terminal device receives eighth indication information sent by the first network device, where the fifth indication information indicates which row of the second precoding matrix is not used, or indicates which row of the second precoding matrix does not correspond to (or is not used for) the PUSCH (e.g., the first PUSCH), or indicates which row of the second precoding matrix does not correspond to (or is not used for) the precoding matrix used for the PUSCH (e.g., the first precoding matrix). In this case, the network can flexibly indicate which rows are to be used for 3-port PUSCH transmission, thereby providing space for network optimization configuration. Meanwhile, compared with the previous scheme, signaling overhead can be reduced because only one row needs to be indicated.

Optionally, the eighth indication information may indicate which row among the four rows is not used by means of a bitmap. For example, if a value of a bit at a corresponding position in the bitmap is 1, it indicates that a corresponding row is not used.

Optionally, the eighth indication information indicates an identifier corresponding to one row, and the row does not correspond to the PUSCH.

Optionally, the eighth indication information and the fifth indication information are the same information. In this case, available SRS ports correspond to available rows of the second precoding matrix according to a certain rule. For example, if port *x* of the SRS resource is not used or does not correspond to the PUSCH, row x of the second precoding matrix does not correspond to the PUSCH, or rows other than row x of the second precoding matrix correspond to the precoding matrix used for the PUSCH (e.g., the first precoding matrix).

Optionally, the eighth indication information and the fifth indication information are transmitted via the same signaling.

In an implementation example, if the first network device indicates a 4-port precoding matrix $\frac{1}{2} \left[\begin{matrix}1 \\ 0 \\ 0 \\ 0\end{matrix}\right]$ (e.g., indicating a corresponding TPMI via DCI used for scheduling the PUSCH, or indicating via RRC signaling *ConfiguredGrantConfig),* the first three rows are used for the first precoding matrix (a coefficient of the entire precoding matrix may be different, e.g., 1/2 becomes $\left.1/\sqrt{3}\right) \left[\begin{matrix}1 \\ 0 \\ 0\end{matrix}\right]$.

Optionally, for 1-layer (single-layer) PUSCH based on three ports, the network indicates that a TPMI index is one of 0, 1, or 2, or is one of 0, 1, 2, 4, 5, 6, 7, 12, 13, 14, 15, 16, 17, 18, 19, 20, 21, 22, 23, 24, 25, 26, or 27.

Optionally, before the foregoing operations, the first terminal device reports first terminal capability to the first network device, where the first terminal capability supports 3-port PUSCH transmission, or supports PUSCH transmission using a 3-port TPMI or a 3-port codebook, or supports one SRS resource using three ports, or supports up to 3-layer PUSCH (up to 3-layer UL transmission), or the maximum number of SRS ports supported by the UE in one SRS resource is 3.

Optionally, the first terminal capability is transmitted via RRC signaling or an MAC CE.

Optionally, the first terminal capability is reported per band (i.e., different bands can be used to independently report corresponding capabilities). In this case, independently reporting by using different bands can enable a terminal to achieve greater flexibility. For example, the terminal may support this function on a specific band or some bands, and does not support this function on another band, such that more terminals may be allowed to support this new function.

Optionally, the first terminal capability is reported independently per band combination. In this case, independently reporting by using different band combinations can enable the terminal to achieve greater flexibility. For example, the terminal may not support this function on a specific band combination, but support this function on another band combination, such that more terminals may be allowed to support this new function.

Optionally, the first terminal capability is reported independently per band per band combination (i.e., each band in a different band combination can be used for independently reporting). In this case, independently reporting by using different band combinations may enable the terminal to achieve greater flexibility. For example, the terminal may not support this function on CA, but support this function on some bands in another CA combination, such that more terminals may be allowed to support this new function.

Optionally, the first terminal capability is reported independently per carrier per band per band combination (i.e., a different CC in a different band in a different band combination can be used for independently reporting, per CC per band per band combination, or FSPC). In this case, a different band combination is used for independently reporting, and a different carrier on a band may also be used for independently reporting, such that the terminal may achieve greater flexibility, and thus more terminals may be allowed to support this new function.

Optionally, the first terminal capability is reported per FR (i.e., different FRs may be used for independently reporting, i.e., FR1 and FR2 may be used for independently reporting). In this case, different FRs are used for independently reporting, such that the terminal may achieve greater flexibility. For example, the terminal does not support this function at a low frequency (such as FR1), but supports this function at a high frequency (such as FR2), such that more terminals may be allowed to support this new function.

Optionally, the first terminal capability is reported per UE (i.e., if a UE reports the capability, the UE may support the capability on each band). In this case, signalling overheads of reporting the terminal capability can be reduced.

The indication or configurations of the network mentioned above need to match the capabilities reported by the UE. For example, after receiving the first terminal capability reported by the UE, the network can indicate to the UE the first SRS resource set that contains configuration information of 4-port SRS resources (for the manner in TPMI implementation 2).

Reference may be made to FIG. 5, which illustrates a block diagram of an apparatus for PUSCH transmission provided in an implementation of the present disclosure. The apparatus for PUSCH transmission has the function(s) of implementing the method performed by the terminal device in any one of FIG. 2 to FIG. 4. As illustrated in FIG. 5, the apparatus may include a transmitting module 501. The transmitting module 501 is configured to transmit a PUSCH via a precoding matrix, where the precoding matrix corresponds to one 3-port TPMI or corresponds to one 3-port codebook.

In some implementations, the precoding matrix contains three rows of matrix parameters, and the three rows of matrix parameters are in one-to-one correspondence with three transmission ports.

In some implementations, the precoding matrix corresponds to the first three rows of parameters or the last three rows of parameters in a 4-port TPMI; or the precoding matrix corresponds to the first three rows of parameters or the last three rows of parameters in a 4-port codebook.

In some implementations, the PUSCH is scheduled by *ConfiguredGrantConfig* or *semiPersistentOnPUSCH* that is configured by radio resource control (RRC), where a value of a transmission configuration *txConfig* in *PUSCH-Config* configured by RRC is set to 'codebook'.

In some implementations, the apparatus further includes a first receiving module. The first receiving module is configured to receive first indication information, where the first indication information indicates that the terminal device is to perform 3-port PUSCH transmission.

In some implementations, the first indication information indicates that the terminal device is to perform PUSCH transmission using a 3-port TPMI or a 3-port codebook.

In some implementations, the apparatus further includes a second receiving module. The second receiving module is configured to receive second indication information, where the second indication information indicates one or more SRS resource sets, each of the one or more SRS resource sets contains one or more SRS resources, and usage of each of the one or more SRS resource sets is configured as 'codebook'.

In some implementations, each of all or part of the one or more SRS resources is a 3-port SRS resource.

In some implementations, each of all or part of the one or more SRS resources is a 4-port SRS resource.

In some implementations, the apparatus further includes a third receiving module. The third receiving module is configured to receive third indication information, where the third indication information indicates that the terminal device is to use three ports of the 4-port SRS resource.

In some implementations, the third indication information is carried in configuration information of the one or more SRS resource sets, or the third indication information is carried in configuration information of the one or more SRS resources.

In some implementations, the third indication information and the first indication information are the same indication information; or the third indication information and the first indication information are carried in the same signaling.

In some implementations, the apparatus further includes a fourth receiving module. The fourth receiving module is configured to receive fourth indication information, where the fourth indication information indicates three used ports of the 4-port SRS resource, or indicates three ports, corresponding to the PUSCH, of the 4-port SRS resource, or indicates three ports, corresponding to the precoding matrix used for the PUSCH, of the 4-port SRS resource.

In some implementations, the fourth indication information is carried in configuration information of the one or more SRS resource sets, or the fourth indication information is carried in configuration information of the one or more SRS resources.

In some implementations, the fourth indication information and the first indication information are the same indication information; or the fourth indication information and the first indication information are carried in the same signaling.

In some implementations, the apparatus further includes a fifth receiving module. The fifth receiving module is configured to receive fifth indication information, where the fifth indication information indicates an unused port of the 4-port SRS resource, or indicates a port, not used for or not corresponding to the PUSCH, of the 4-port SRS resource, or indicates a port, not used for or not corresponding to the precoding matrix used for the PUSCH, of the 4-port SRS resource.

In some implementations, the fifth indication information is carried in configuration information of the one or more SRS resource sets, or the fifth indication information is carried in configuration information of the one or more SRS resources.

In some implementations, the fifth indication information and the first indication information are the same indication information; or the fifth indication information and the first indication information are carried in the same signaling.

In some implementations, each of all or part of the one or more SRS resources is formed by one single-port SRS resource and one two-port SRS resource.

In some implementations, each of all or part of the one or more SRS resources is formed by three single-port SRS resources.

In some implementations, the apparatus further includes a power control module. The power control module is configured to scale a transmission power of the PUSCH by a scaling factor.

In some implementations, the scaling factor is a ratio of the number of non-zero ports for the PUSCH to 3.

In some implementations, the transmitting module is further configured to report capability information of the terminal device to a network device, where the capability information indicates that the terminal device supports 3-port PUSCH transmission, or indicates that the terminal device supports PUSCH transmission using a 3-port TPMI or a 3-port codebook, or indicates that the terminal device supports an SRS resource using three ports, or indicates that the terminal device supports up to 3-layer PUSCH.

In some implementations, the capability information is transmitted via at least one of the following signaling: RRC signaling or an MAC CE.

In some implementations, the capability information is reported per band; or the capability information is reported independently per band combination; or the capability information is reported independently per band per band combination; or the capability information is reported independently per carrier per band per band combination; or the capability information is reported per FR; or the capability information is reported per device.

Reference may be made to FIG. 6, which illustrates a block diagram of an apparatus for PUSCH transmission provided in an implementation of the present disclosure. The apparatus for PUSCH transmission has the function(s) of implementing the method performed by the network device in any one of FIG. 2 to FIG. 4. As illustrated in FIG. 6, the apparatus may include a receiving module 601. The receiving module 601 is configured to receive a PUSCH transmitted by a terminal device via a precoding matrix, where the precoding matrix corresponds to one 3-port TPMI or corresponds to one 3-port codebook.

In some implementations, the precoding matrix contains three rows of matrix parameters, and the three rows of matrix parameters are in one-to-one correspondence with three transmission ports.

In some implementations, the precoding matrix corresponds to the first three rows of parameters or the last three rows of parameters in a 4-port TPMI; or the precoding matrix corresponds to the first three rows of parameters or the last three rows of parameters in a 4-port codebook.

In some implementations, the PUSCH is scheduled by *ConfiguredGrantConfig* or *semiPersistentOnPUSCH* that is configured by radio resource control (RRC), where a value of a transmission configuration *txConfig* in *PUSCH-Config* configured by RRC is set to 'codebook'.

In some implementations, the apparatus further includes a first transmitting module. The first transmitting module is configured to transmit first indication information to the terminal device, where the first indication information indicates that the terminal device is to perform 3-port PUSCH transmission.

In some implementations, the first indication information indicates that the terminal device is to perform PUSCH transmission using a 3-port TPMI or a 3-port codebook.

In some implementations, the apparatus further includes a second transmitting module. The second transmitting module is configured to transmit second indication information to the terminal device, where the second indication information indicates one or more SRS resource sets, each of the one or more SRS resource sets contains one or more SRS resources, and usage of each of the one or more SRS resource sets is configured as 'codebook'.

In some implementations, each of all or part of the one or more SRS resources is a 3-port SRS resource.

In some implementations, each of all or part of the one or more SRS resources is a 4-port SRS resource.

In some implementations, the apparatus further includes a third transmitting module. The third transmitting module is configured to transmit third indication information to the terminal device, where the third indication information indicates that the terminal device is to use three ports of the 4-port SRS resource.

In some implementations, the third indication information is carried in configuration information of the one or more SRS resource sets, or the third indication information is carried in configuration information of the one or more SRS resources.

In some implementations, the third indication information and the first indication information are the same indication information; or the third indication information and the first indication information are carried in the same signaling.

In some implementations, the apparatus further includes a fourth transmitting module. The fourth transmitting module is configured to transmit fourth indication information to the terminal device, where the fourth indication information indicates three used ports of the 4-port SRS resource, or indicates three ports, corresponding to the PUSCH, of the 4-port SRS resource, or indicates three ports, corresponding to the precoding matrix used for the PUSCH, of the 4-port SRS resource.

In some implementations, the fourth indication information is carried in configuration information of the one or more SRS resource sets, or the fourth indication information is carried in configuration information of the one or more SRS resources.

In some implementations, the fourth indication information and the first indication information are the same indication information; or the fourth indication information and the first indication information are carried in the same signaling.

In some implementations, the apparatus further includes a fifth transmitting module. The fifth transmitting module is configured to transmit fifth indication information to the terminal device, where the fifth indication information indicates an unused port of the 4-port SRS resource, or indicates a port, not used for or not corresponding to the PUSCH, of the 4-port SRS resource, or indicates a port, not used for or not corresponding to the precoding matrix used for the PUSCH, of the 4-port SRS resource.

In some implementations, the fifth indication information is carried in configuration information of the one or more SRS resource sets, or the fifth indication information is carried in configuration information of the one or more SRS resources.

In some implementations, the fifth indication information and the first indication information are the same indication information; or the fifth indication information and the first indication information are carried in the same signaling.

In some implementations, each of all or part of the one or more SRS resources is formed by one single-port SRS resource and one two-port SRS resource.

In some implementations, each of all or part of the one or more SRS resources is formed by three single-port SRS resources.

In some implementations, a transmission power of the PUSCH is scaled by a scaling factor.

In some implementations, the scaling factor is a ratio of the number of non-zero ports for the PUSCH to 3.

In some implementations, the receiving module is further configured to receive capability information of the terminal device reported by the terminal device, where the capability information indicates that the terminal device supports 3-port PUSCH transmission, or indicates that the terminal device supports PUSCH transmission using a 3-port TPMI or a 3-port codebook, or indicates that the terminal device supports an SRS resource using three ports, or indicates that the terminal device supports up to 3-layer PUSCH.

In some implementations, the capability information is transmitted via at least one of the following signaling: RRC signaling or an MAC CE.

In some implementations, the capability information is reported per band; or the capability information is reported independently per band combination; or the capability information is reported independently per band per band combination; or the capability information is reported independently per carrier per band per band combination; or the capability information is reported per FR; or the capability information is reported per device.

It may be noted that, when the apparatus provided in the foregoing implementations implements its functions, only the division into the functional modules is taken as an example for illustration. In practice, the functions can be allocated to different functional modules according to actual needs, that is, the structure of the device is divided into different functional modules to complete all or some of the functions described above.

Regarding the apparatus in the foregoing implementations, the manner in which each module performs operations has been described in detail in the related method implementations and thus will not be elaborated again herein.

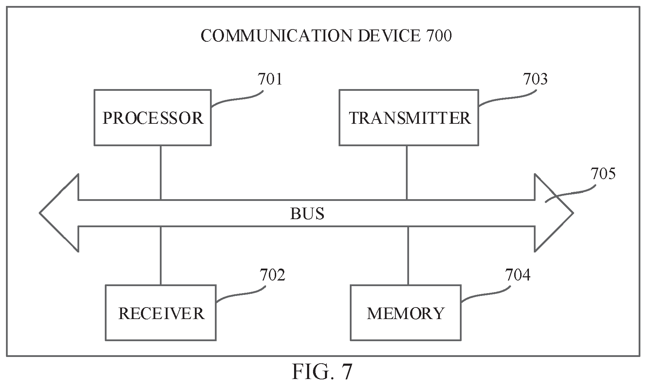

Reference may be made to FIG. 7, which illustrates a schematic structural diagram of a communication device 700 provided in an implementation of the present disclosure. The communication device 700 may include: a processor 701, a receiver 702, a transmitter 703, a memory 704, and a bus 705.

The processor 701 includes one or more processing cores. The processor 701 performs various functional applications and information processing by running software programs and modules.

The receiver 702 and the transmitter 703 may be implemented as a communication assembly. The communication assembly may be a communication chip. The communication chip may also be referred to as a transceiver. The memory 704 is connected with the processor 701 via the bus 705. The memory 704 may be configured to store a computer program, and the processor 701 is configured to execute the computer program to implement various steps in the foregoing method implementations.

In addition, the memory 704 may be implemented by any type of volatile or nonvolatile storage devices or combinations thereof. The volatile or non-volatile storage devices include, but are not limited to: a magnetic disk or an optical disk, an electrically erasable programmable read-only memory (EEPROM), an erasable PROM (EPROM), a static random-access memory (SRAM), a read only memory (ROM), a magnetic memory, a flash memory, and a programmable ROM (PROM).

In an exemplary solution, when the communication device 700 is implemented as the first device, the receiver 702 and the processor 701 execute the computer program, to cause the communication device to implement the various steps performed by the terminal device in any of the methods as illustrated in FIG. 2 to FIG. 4.

In an exemplary solution, when the communication device 700 is implemented as the second device, the transmitter 703 and the processor 701 execute the computer program, to cause the communication device to implement the various steps performed by the network device in any of the methods as illustrated in FIG. 2 to FIG. 4.

A computer-readable storage medium is further provided in implementations of the present disclosure. The computer-readable storage medium is configured to store a computer program that is loaded and executed by a processor to implement all or part of the steps performed by the terminal device or the network device in any of the methods as illustrated in FIG. 2 to FIG. 4.

A chip is further provided in the present disclosure. The chip includes an integrated circuit and firmware disposed in the integrated circuit. The chip is configured to execute in a communication device, to cause the communication device to implement all or part of the steps performed by the terminal device or the network device in any of the methods as illustrated in FIG. 2 to FIG. 4.

A computer program product is further provided in the present disclosure. The computer program product or a computer program comprising computer instructions stored in a computer-readable storage medium. A processor of a communication device is configured to read the computer instructions from the computer-readable storage medium and execute the computer instructions, to cause the communication device to implement all or part of the steps performed by the terminal device or the network device in any of the methods as illustrated in FIG. 2 to FIG. 4.

A computer program is further provided in the present disclosure. The computer program is executed by a processor of a communication device, to implement all or part of the steps performed by the terminal device or the network device in any of the methods as illustrated in FIG. 2 to FIG. 4.

Those skilled in the art can appreciate that in one or more of the examples, the functions described in implementations of the present disclosure may be implemented by hardware, software, firmware, or any combination thereof. When implemented by software, the functions may be stored in a computer-readable medium or transmitted as one or more instructions or codes in the computer-readable medium. The computer-readable medium includes a computer storage medium and a communication medium, where the communication medium includes any medium that facilitates transfer of a computer program from one place to another, and the storage medium may be any available medium that can be accessed by a general-purpose computer or a special-purpose computer.

The foregoing elaborations are merely exemplary implementations of the present disclosure, and are not intended to limit the present disclosure. Any modification, equivalent replacement, and improvement made within the concept and principle of the present disclosure shall fall within the protection scope of the present disclosure.

## Claims

1. A method for physical uplink shared channel (PUSCH) transmission, performed by a terminal device and comprising:
transmitting a PUSCH via a precoding matrix, wherein
the precoding matrix corresponds to one 3-port transmit precoding matrix indicator (TPMI) or corresponds to one 3-port codebook.

2. The method of claim 1, wherein the precoding matrix contains three rows of matrix parameters, and the three rows of matrix parameters are in one-to-one correspondence with three transmission ports.

3. The method of claim 1 or 2, wherein
the precoding matrix corresponds to first three rows of parameters or last three rows of parameters in a 4-port TPMI; or
the precoding matrix corresponds to first three rows of parameters or last three rows of parameters in a 4-port codebook.

4. The method of any one of claims 1 to 3, wherein the PUSCH is scheduled by *ConfiguredGrantConfig* or *semiPersistentOnPUSCH* that is configured by radio resource control (RRC), wherein a value of a transmission configuration *txConfig* in *PUSCH-Config* configured by RRC is set to 'codebook'.

5. The method of any one of claims 1 to 4, further comprising:
receiving first indication information, wherein the first indication information indicates that the terminal device is to perform 3-port PUSCH transmission.

6. The method of claim 5, wherein the first indication information indicates that the terminal device is to perform PUSCH transmission using a 3-port TPMI or a 3-port codebook.

7. The method of any one of claims 1 to 6, further comprising:
receiving second indication information, wherein the second indication information indicates one or more sounding reference signal (SRS) resource sets, each of the one or more SRS resource sets contains one or more SRS resources, and usage of each of the one or more SRS resource sets is configured as 'codebook'.

8. The method of claim 7, wherein each of all or part of the one or more SRS resources is a 3-port SRS resource.

9. The method of claim 7 or 8, wherein each of all or part of the one or more SRS resources is a 4-port SRS resource.

10. The method of claim 9, further comprising:
receiving third indication information, wherein the third indication information indicates that the terminal device is to use three ports of the 4-port SRS resource.

11. The method of claim 10, wherein the third indication information is carried in configuration information of the one or more SRS resource sets, or the third indication information is carried in configuration information of the one or more SRS resources.

12. The method of claim 10 or 11, wherein
the third indication information and the first indication information are the same indication information; or
the third indication information and the first indication information are carried in the same signaling.

13. The method of any one of claims 9 to 12, further comprising:
receiving fourth indication information, wherein the fourth indication information indicates three used ports of the 4-port SRS resource, or indicates three ports, corresponding to the PUSCH, of the 4-port SRS resource, or indicates three ports, corresponding to the precoding matrix used for the PUSCH, of the 4-port SRS resource.

14. The method of claim 13, wherein the fourth indication information is carried in configuration information of the one or more SRS resource sets, or the fourth indication information is carried in configuration information of the one or more SRS resources.

15. The method of claim 13 or 14, wherein
the fourth indication information and the first indication information are the same indication information; or
the fourth indication information and the first indication information are carried in the same signaling.

16. The method of any one of claims 9 to 15, further comprising:
receiving fifth indication information, wherein the fifth indication information indicates an unused port of the 4-port SRS resource, or indicates a port, not used for or not corresponding to the PUSCH, of the 4-port SRS resource, or indicates a port, not used for or not corresponding to the precoding matrix used for the PUSCH, of the 4-port SRS resource.

17. The method of claim 16, wherein the fifth indication information is carried in configuration information of the one or more SRS resource sets, or the fifth indication information is carried in configuration information of the one or more SRS resources.

18. The method of claim 16 or 17, wherein
the fifth indication information and the first indication information are the same indication information; or
the fifth indication information and the first indication information are carried in the same signaling.

19. The method of any one of claims 7 to 18, wherein each of all or part of the one or more SRS resources is formed by one single-port SRS resource and one two-port SRS resource.

20. The method of any one of claims 7 to 19, wherein each of all or part of the one or more SRS resources is formed by three single-port SRS resources.

21. The method of any one of claims 1 to 20, further comprising:
scaling a transmission power of the PUSCH by a scaling factor.

22. The method of claim 21, wherein the scaling factor is a ratio of a number of non-zero ports for the PUSCH to 3.

23. The method of any one of claims 1 to 22, further comprising:
reporting capability information of the terminal device to a network device, wherein the capability information indicates that the terminal device supports 3-port PUSCH transmission, or indicates that the terminal device supports PUSCH transmission using a 3-port TPMI or a 3-port codebook, or indicates that the terminal device supports an SRS resource using three ports, or indicates that the terminal device supports up to 3-layer PUSCH.

24. The method of claim 23, wherein the capability information is transmitted via at least one of the following signaling:
RRC signaling or a medium access control control element (MAC CE).

25. The method of claim 23 or 24, wherein
the capability information is reported per band; or
the capability information is reported independently per band combination; or
the capability information is reported independently per band per band combination; or
the capability information is reported independently per carrier per band per band combination; or
the capability information is reported per frequency range (FR); or
the capability information is reported per device.

26. A method for physical uplink shared channel (PUSCH) transmission, performed by a network device and comprising:
receiving a PUSCH transmitted by a terminal device via a precoding matrix, wherein
the precoding matrix corresponds to one 3-port transmit precoding matrix indicator (TPMI) or corresponds to one 3-port codebook.

27. The method of claim 26, wherein the precoding matrix contains three rows of matrix parameters, and the three rows of matrix parameters are in one-to-one correspondence with three transmission ports.

28. The method of claim 26 or 27, wherein
the precoding matrix corresponds to first three rows of parameters or last three rows of parameters in a 4-port TPMI; or
the precoding matrix corresponds to first three rows of parameters or last three rows of parameters in a 4-port codebook.

29. The method of any one of claims 26 to 28, wherein the PUSCH is scheduled by *ConfiguredGrantConfig* or *semiPersistentOnPUSCH* that is configured by radio resource control (RRC), wherein a value of a transmission configuration *txConfig* in *PUSCH-Config* configured by RRC is set to 'codebook'.

30. The method of any one of claims 26 to 29, further comprising:
transmitting first indication information to the terminal device, wherein the first indication information indicates that the terminal device is to perform 3-port PUSCH transmission.

31. The method of claim 30, wherein the first indication information indicates that the terminal device is to perform PUSCH transmission using a 3-port TPMI or a 3-port codebook.

32. The method of any one of claims 26 to 31, further comprising:
transmitting second indication information to the terminal device, wherein the second indication information indicates one or more sounding reference signal (SRS) resource sets, each of the one or more SRS resource sets contains one or more SRS resources, and usage of each of the one or more SRS resource sets is configured as 'codebook'.

33. The method of claim 32, wherein each of all or part of the one or more SRS resources is a 3-port SRS resource.

34. The method of claim 32 or 33, wherein each of all or part of the one or more SRS resources is a 4-port SRS resource.

35. The method of claim 34, further comprising:
transmitting third indication information to the terminal device, wherein the third indication information indicates that the terminal device is to use three ports of the 4-port SRS resource.

36. The method of claim 35, wherein the third indication information is carried in configuration information of the one or more SRS resource sets, or the third indication information is carried in configuration information of the one or more SRS resources.

37. The method of claim 35 or 36, wherein
the third indication information and the first indication information are the same indication information; or
the third indication information and the first indication information are carried in the same signaling.

38. The method of any one of claims 34 to 37, further comprising:
transmitting fourth indication information to the terminal device, wherein the fourth indication information indicates three used ports of the 4-port SRS resource, or indicates three ports, corresponding to the PUSCH, of the 4-port SRS resource, or indicates three ports, corresponding to the precoding matrix used for the PUSCH, of the 4-port SRS resource.

39. The method of claim 38, wherein the fourth indication information is carried in configuration information of the one or more SRS resource sets, or the fourth indication information is carried in configuration information of the one or more SRS resources.

40. The method of claim 38 or 39, wherein
the fourth indication information and the first indication information are the same indication information; or
the fourth indication information and the first indication information are carried in the same signaling.

41. The method of any one of claims 34 to 40, further comprising:
transmitting fifth indication information to the terminal device, wherein the fifth indication information indicates an unused port of the 4-port SRS resource, or indicates a port, not used for or not corresponding to the PUSCH, of the 4-port SRS resource, or indicates a port, not used for or not corresponding to the precoding matrix used for the PUSCH, of the 4-port SRS resource.

42. The method of claim 41, wherein the fifth indication information is carried in configuration information of the one or more SRS resource sets, or the fifth indication information is carried in configuration information of the one or more SRS resources.

43. The method of claim 41 or 42, wherein
the fifth indication information and the first indication information are the same indication information; or
the fifth indication information and the first indication information are carried in the same signaling.

44. The method of any one of claims 32 to 43, wherein each of all or part of the one or more SRS resources is formed by one single-port SRS resource and one two-port SRS resource.

45. The method of any one of claims 32 to 44, wherein each of all or part of the one or more SRS resources is formed by three single-port SRS resources.

46. The method of any one of claims 26 to 45, wherein a transmission power of the PUSCH is scaled by a scaling factor.

47. The method of claim 46, wherein the scaling factor is a ratio of a number of non-zero ports for the PUSCH to 3.

48. The method of any one of claims 26 to 47, further comprising:
receiving capability information of the terminal device reported by the terminal device, wherein the capability information indicates that the terminal device supports 3-port PUSCH transmission, or indicates that the terminal device supports PUSCH transmission using a 3-port TPMI or a 3-port codebook, or indicates that the terminal device supports an SRS resource using three ports, or indicates that the terminal device supports up to 3-layer PUSCH.

49. The method of claim 48, wherein the capability information is transmitted via at least one of the following signaling:
RRC signaling or a medium access control control element (MAC CE).

50. The method of claim 48 or 49, wherein
the capability information is reported per band; or
the capability information is reported independently per band combination; or
the capability information is reported independently per band per band combination; or
the capability information is reported independently per carrier per band per band combination; or
the capability information is reported per frequency range (FR); or
the capability information is reported per device.

51. An apparatus for physical uplink shared channel (PUSCH) transmission, comprising:
a transmitting module configured to transmit a PUSCH via a precoding matrix, wherein
the precoding matrix corresponds to one 3-port transmit precoding matrix indicator (TPMI) or corresponds to one 3-port codebook.

52. An apparatus for physical uplink shared channel (PUSCH) transmission, comprising:
a receiving module configured to receive a PUSCH transmitted by a terminal device via a precoding matrix, wherein
the precoding matrix corresponds to one 3-port transmit precoding matrix indicator (TPMI) or corresponds to one 3-port codebook.

53. A communication device, comprising:
a transceiver;
a memory configured to store a computer program; and
a processor configured to execute the computer program, to cause the network device to implement the method for PUSCH transmission of any one of claims 1 to 50.

54. A computer-readable storage medium configured to store a computer program that is executed by a processor of a communication device, to cause the communication device to implement the method for PUSCH transmission of any one of claims 1 to 50.

55. A chip, comprising an integrated circuit and firmware disposed in the integrated circuit, wherein the chip is configured to execute in a communication device, to cause the communication device to perform the method for PUSCH transmission of any one of claims 1 to 50.

56. A computer program product comprising computer instructions stored in a computer-readable storage medium, and a processor of a communication device being configured to read the computer instructions from the computer-readable storage medium and execute the computer instructions, to cause the communication device to perform the method for PUSCH transmission of any one of claims 1 to 50.

57. A computer program being executed by a processor of a communication device, to cause the communication device to implement the method for PUSCH transmission of any one of claims 1 to 50.
